# EUROPEAN PATENT SPECIFICATION

(11) **EP 2 699 776 B1**
(45) Date of publication and mention of the grant of the patent: **10.06.2020**
(21) Application number: 12774879.6
(22) Date of filing: 05.04.2012
(51) Int. Cl.: F01N 11/00, F01N 3/20, G01F 25/00, G01F 23/30, G01F 23/70

(54) **METHOD AND DEVICE FOR DETERMINING THE DOSED REDUCING AGENT VOLUME IN AN SCR SYSTEM**
VERFAHREN UND VORRICHTUNG ZUR BESTIMMUNG DES DOSIERUNGSVOLUMENS EINES REDUKTIONSMITTELS IN EINEM SCR-SYSTEM
PROCÉDÉ ET DISPOSITIF POUR DÉTERMINER LE VOLUME DOSÉ D'UN AGENT RÉDUCTEUR DANS UN SYSTÈME DE RÉDUCTION CATALYTIQUE SÉLECTIVE (SCR)

(30) Priority: 19.04.2011 SE 1150342
(43) Date of publication of application: 26.02.2014
(73) Proprietor: Scania CV AB, 151 87 Södertälje (SE)
(72) Inventor: GUSTAFSSON, Erik, 151 47 Södertälje (SE); ERIKSSON, Lars, 153 38 Järna (SE)
(74) Representative: Scania CV AB
(86) International application number: PCT/SE2012/050373
(87) International publication number: WO 2012/144945

(56) References cited:
- EP-A2- 1 139 076
- EP-A2- 1 139 076
- GB-A- 2 138 947
- GB-A- 2 138 947
- US-A- 5 826 459
- US-A1- 2005 251 318
- US-A1- 2005 251 318

## Description

### TECHNICAL FIELD

The present invention relates to a method pertaining to an SCR system for exhaust cleaning which comprises a container, to accommodate a reducing agent, and a dosing unit. The invention relates also to a computer programme product comprising programme code for a computer for implementing a method according to the invention. The invention relates also to an SCR system for exhaust cleaning and a motor vehicle which is equipped with the SCR system.

### BACKGROUND

Vehicles today use, for example, urea as reductant in SCR (selective catalytic reduction) systems which comprise an SCR catalyst in which said reductant and NOx gas can react and be converted to nitrogen gas and water. Various types of reductants may be used in SCR systems. AdBlue is an example of a commonly used reductant.

A type of SCR system comprises a container which holds a reductant. The SCR system has also a pump arranged to draw said reductant from the container via a suction hose and to supply it via a pressurised hose to a dosing unit situated adjacent to an exhaust system of the vehicle, e.g. adjacent to an exhaust pipe of the exhaust system. The dosing unit is arranged to inject a necessary amount of reductant into the exhaust pipe upstream of the SCR catalyst according to operating routines which are stored in a control unit of the vehicle. To make it easier to regulate the pressure when there are only small or no dosing amounts, the system comprises also a return hose which runs back to the container from a pressure side of the system.

To cope with meeting the ever more stringent emission requirements as regards NOₓ, it is becoming increasingly common for vehicle manufacturers to equip their new vehicles with SCR systems, e.g. of the kind described above. It is also desirable to be able to diagnose whether a vehicle's SCR system doses correct amounts of reducing agent. One way of diagnosing such low consumption of reducing agent as would cause unacceptable emission discharges is to compare decreases in a volume of reducing agent carried in the container with calculated volumes of reducing agent dosed. However, how this is currently applied is disadvantageous in a number of different ways.

A type of SCR system uses a level sensor provided with a float sensor and arranged vertically in the reducing agent container. This float sensor is adapted to delivering discrete signals, i.e. the only levels read are certain predetermined levels at which so-called switches are situated. The switches are adapted to delivering said discrete signals when a level of the reducing agent passes the level at which the switch is situated. When the actual level of the reducing agent in the container is between two switches, the level read will often be the lower of the levels for the respective switches. This creates problems in diagnosing the SCR system, particularly where so-called consumption tests are required to decide whether a calculated reductant amount dosed corresponds to a detected reductant volume decrease in the container. Since the level sensor only establishes discrete volume indications, too much error as regards the volume decrease detected in the container is inherent in today's consumption tests.

There is therefore a need to improve today's methods for conducting consumption tests of SCR systems, particularly in view of the increasingly stringent requirements, e.g. legal requirements, pertaining to motor vehicles equipped with SCR systems for exhaust cleaning.

US2005251318 and US2010086446 refer to methods for diagnosing urea solution supply in SCR systems by measuring a liquid level and amounts of urea solution consumed.

### SUMMARY OF THE INVENTION

An object of the present invention is to propose a novel and advantageous method for improving the performance of an SCR system.

Another object of the invention is to propose a novel and advantageous device and a novel and advantageous computer programme for improving the performance of an SCR system.

An object of the present invention is to propose a novel and advantageous method for a consumption test in an SCR system.

Another object of the invention is to propose a novel and advantageous computer programme for a consumption test in an SCR system.

A further object of the invention is to propose a method, an SCR system and a computer programme for achieving increased accuracy in a consumption test in an SCR system.

A further object of the invention is to propose an alternative method, an alternative SCR system and an alternative computer programme for a consumption test in an SCR system.

These objects are achieved with a method according to claim 1.

An aspect of the invention is a proposed method pertaining to an SCR system for exhaust cleaning which comprises a container, to accommodate a reducing agent, and a dosing unit, comprising the steps of
- continuously detecting discrete indications for remaining volume of reducing agent in said container,
- setting a first value for said remaining volume to latest detected indication for remaining volume of reducing agent, and
- setting a second value for said remaining volume to latest detected indication for remaining volume of reducing agent, for determination of a detected reducing agent volume dosed.

According to an aspect of the invention, information is saved about an actually prevailing remaining volume of reducing agent specifically when a reducing agent level at a first switch is passed, whereupon a setting is effected to a lower discrete value, and about a calculated reducing agent volume dosed via the dosing unit and corresponding to this level. According to the invention, information is saved about an actually prevailing remaining volume of reducing agent specifically when a reducing agent level at a second switch is passed, whereupon a setting is effected to a lower discrete value, and about a calculated reducing agent volume dosed via the dosing unit and corresponding to this level. This makes it possible to achieve a synchronised consumption test according to the invention. Setting said first value and said second value to respective latest indications detected for remaining volumes of reducing agent makes it possible to achieve greater accuracy in said consumption test.

According to an example, the locations of all of the switches of a measuring device, e.g. a float sensor, situated in the reducing agent container are saved in an electronic control unit which is provided to control the SCR system. Each location represents a known remaining volume of reducing agent. Instead of using a next remaining volume of reducing agent in a consumption test pertaining to an SCR system, as is current practice, the present invention sets said first value and said second value to respective latest indications detected for remaining volumes of reducing agent. A more accurate consumption test for an SCR system can be achieved on the basis of detection by any two suitable switches (corresponding to predetermined volumes of reducing agent remaining in the container) and the calculated reducing agent volume dosed via the dosing unit. This may be done by comparing a calculated reducing agent volume dosed via the dosing unit with a detected reducing agent volume dosed, which detected volume may be established on the basis of a difference in level between the two latest respective established discrete volume indications as indicated by the float sensor before the level of the reductant in the container just dropped below those and were set to the respective subsequent discrete volume indications.

The invention achieves the positive effect of reducing the probability of measurement errors and the risk of false alarms suggesting too low consumption of the reducing agent in the SCR system. The invention also affords with advantage greater potential for handling temporary changes in reducing agent levels detected in the container which may be due to the vehicle travelling on a long hill.

A further advantage is that a driver of the vehicle can be provided with better feedback as regards reducing agent volumes actually consumed in the SCR system.

Said discrete volume indications may be predetermined depending inter alia on container configuration. Taking the configuration of the container into account when the respective switch is associated with a discrete volume indication results in a particularly flexible solution which can be adapted to a large number of container configurations and hence applications of the present invention. The invention is thus an attractive solution for various interested parties, e.g. different vehicle manufacturers with unique container configurations.

The method may further comprise the step of setting said first value at any suitable discrete indication for remaining volumes of reducing agent. The method may comprise the step of setting said first value at a predetermined discrete indication for remaining volumes of reducing agent when a level of the reducing agent is below a level for a predetermined switch by a certain value for a certain time.

The method may further comprise the step of setting said second value at any suitable discrete indication for remaining volumes of reducing agent. The method may comprise the step of setting said second value at a predetermined discrete indication for remaining volumes of reducing agent when a level of the reducing agent is below a level for a predetermined switch by a certain value for a certain time.

The method may further comprise the step of setting said first value and said second value with a predetermined number of intermediate discrete indications for remaining volumes of reducing agent. The result is a versatile method according to the invention.

Said first value and said second value may be set to correspond to a predetermined difference in volume.

The method may further comprise the step of calculating a reducing agent volume dosed via said dosing unit within a time frame defined by the respective times for setting said first value and said second value. A reference value is thus achieved in a robust way and can be used according to a consumption test for an SCR system.

The method may further comprise the step of comparing said detected reducing agent volume dosed and said calculated reducing agent volume dosed in a consumption test. The result is a simple and reliable way of conducting a consumption test for an SCR system.

Said reducing agent may be a fluid solution which contains urea, e.g. AdBlue. There are a number of different suitable reducing agents which may be appropriate for applications according to the invention.

The method is easy to implement in existing motor vehicles. Software pertaining to an SCR system for exhaust cleaning which comprises a container, to accommodate a reducing agent, and a dosing unit according to the invention may be installed in a control unit of the vehicle during the manufacture of the vehicle. A purchaser of the vehicle may thus have the possibility of selecting the function of the method as an option. Alternatively, software which comprises programme code for applying the innovative method to an SCR system for exhaust cleaning may be installed in a control unit of the vehicle on the occasion of upgrading at a service station, in which case the software may be loaded into a memory in the control unit. Implementing the innovative method is therefore cost-effective, particularly since no further components or subsystems need be installed in the vehicle. Relevant hardware is currently already provided in the vehicle. The invention therefore represents a cost-effective solution to the problems indicated above.

Software which comprises programme code pertaining to an SCR system for exhaust cleaning which comprises a container, to accommodate a reducing agent, and a dosing unit is easy to update or replace. Moreover, various portions of the software which comprise programme code for the innovative method may be replaced independently of one another. This modular configuration is advantageous from a maintenance perspective.

An aspect of the invention pertains to an SCR system for exhaust cleaning which comprises a container, to accommodate a reducing agent, and a dosing unit, comprising
- means for continuously detecting discrete indications for remaining volume of reducing agent in said container,
- means for setting a first value for said remaining volume to latest detected indication for remaining volume of reducing agent, and
- means for setting a second value for said remaining volume to latest detected indication for remaining volume of reducing agent, for determination of a detected reducing agent volume dosed (Vdetect).

The SCR system may further comprise
- means for setting said first value at any suitable discrete indication for remaining volumes of reducing agent.

The SCR system may further comprise
- means for setting said second value at any suitable discrete indication for remaining volumes of reducing agent.

The SCR system may further comprise
- means for setting said first value and said second value with a predetermined number of intermediate discrete indications for remaining volumes of reducing agent.

Said first value and said second value may be set to correspond to a predetermined difference in volume.

The SCR system may further comprise
- means for calculating a reducing agent volume dosed via said dosing unit within a time frame defined by the respective times for setting said first value and said second value.

The SCR system may further comprise
- means for comparing said detected reducing agent volume dosed and said calculated reducing agent volume dosed in a consumption test.

The above objects are also achieved with a motor vehicle which is provided with the SCR system. The vehicle may be a truck, bus or car.

An aspect of the invention pertains to any platform provided with an SCR system in accordance with the descriptions herein, e.g. a watercraft. The watercraft may be of any kind, e.g. a motorboat, a steamer, a ferry or a ship.

An aspect of the invention is a proposed computer programme pertaining to an SCR system for exhaust cleaning which comprises a container, to accommodate a reducing agent, and a dosing unit, which programme comprises programme code stored on a computer-readable medium for causing an electronic control unit or another computer connected to the electronic control unit to perform steps according to any of claims 1-7.

An aspect of the invention is a proposed computer programme product comprising a programme code stored on a computer-readable medium for performing method steps according to any of claims 1-7 when said computer programme is run on an electronic control unit or another computer connected to the electronic control unit.

Further objects, advantages and novel features of the present invention will become apparent to one skilled in the art from the following details, and also by putting the invention into practice.

### BRIEF DESCRIPTION OF THE DRAWINGS

For fuller understanding of the present invention and its further objects and advantages, the detailed description set out below should be read together with the accompanying drawings, in which the same reference notations denote similar items in the various diagrams, and in which:
Figure 1 schematically illustrates a vehicle according to an embodiment of the invention;
Figure 2 schematically illustrates a subsystem for the vehicle depicted in

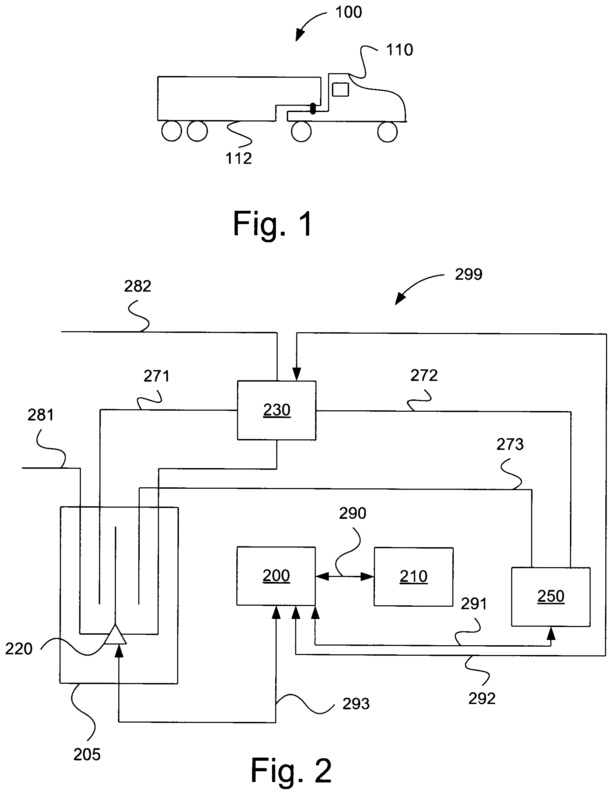

Figure 1, according to an embodiment of the invention;

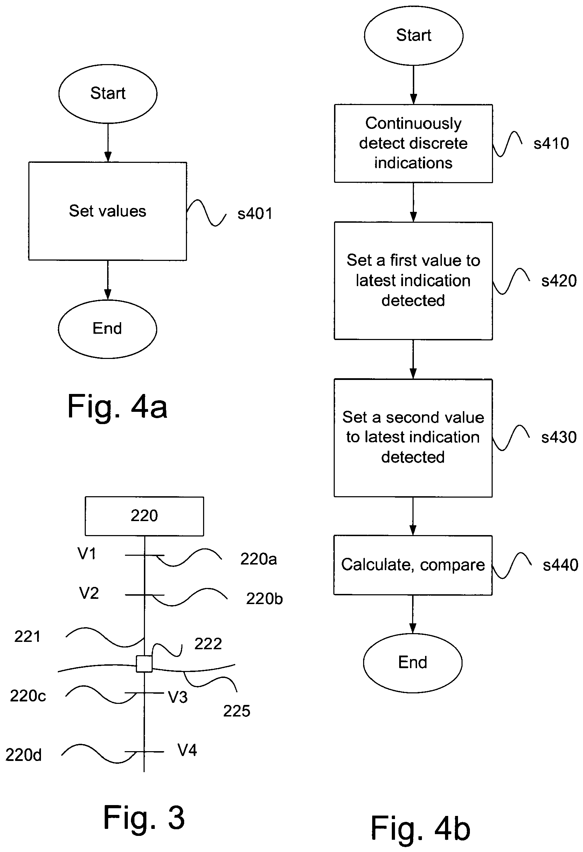

Figure 3 schematically illustrates a measuring device for a container, according to an embodiment of the invention;
Figure 4a is a schematic flowchart of a method according to an embodiment of the invention;
Figure 4b is a more detailed schematic flowchart of a method according to an embodiment of the invention; and

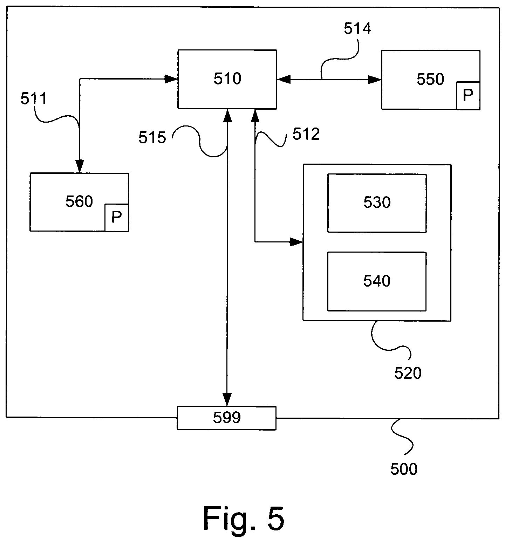

Figure 5 schematically illustrates a computer according to an embodiment of the invention.

### DETAILED DESCRIPTION OF THE DRAWINGS

Figure 1 depicts a side view of a vehicle 100. The exemplified vehicle 100 comprises a tractor unit 110 and a semitrailer 112. The vehicle may be a heavy vehicle, e.g. a truck or a bus. The vehicle may alternatively be a car.

It should be noted that the invention is suitable for application in any SCR system and is therefore not confined to SCR systems of motor vehicles. The innovative method and the innovative device according to an aspect of the invention are well suited to other platforms which comprise an SCR system than motor vehicles, e.g. watercraft. The watercraft may be of any kind, e.g. motor boats, steamers, ferries or ships.

The innovative method and the innovative device according to an aspect of the invention are also well suited to, for example, systems which comprise industrial engines and/or engine-powered industrial robots.

The innovative method and the innovative device according to an aspect of the invention are also well suited to various kinds of power plants, e.g. an electric power plant which comprises a diesel generator.

The innovative method and the innovative device are also well suited to any engine system which comprises an engine and an SCR system, e.g. on a locomotive or some other platform.

The innovative method and the innovative device are also well suited to any system which comprises an NOₓ generator and an SCR system.

The term "link" refers herein to a communication link which may be a physical connection such as an opto-electronic communication line, or a non-physical connection such as a wireless connection, e.g. a radio link or microwave link.

The term "line" refers herein to a passage for holding and conveying a fluid, e.g. a reductant in liquid form. The line may be a pipe of any desired size and be made of any suitable material, e.g. plastic, rubber or metal.

The term "reductant" or "reducing agent" refers herein to an agent used for reacting with certain emissions in an SCR system. These emissions may for example be NOx gas. The terms "reductant" and "reducing agent" are herein used synonymously. According to a version, said reductant is so-called AdBlue. Other kinds of reductants may of course be used. AdBlue is herein cited as an example of a reductant, but one skilled in the art will appreciate that the innovative method and the innovative device are feasible with other types of reductants, subject to necessary adaptations, e.g. a relationship between volumes of reductant and corresponding amounts of reductant, in control algorithms for executing software code in accordance with the innovative method.

The terms "volume" and "amount" of reducing agent are herein used synonymously, based on the fact that an amount of reducing agent is the product of volume and concentration for a specific reducing agent. It is also regarded as a fact that a certain volume of reducing agent in a container may be associated with a certain level, or a difference in level, in a reducing agent container if the container's configuration is known per se.

Figure 2 depicts a subsystem 299 of the vehicle 100. The subsystem 299 is situated in the tractor unit 110. The subsystem 299 may be part of an SCR system. The subsystem 299 comprises in this example a container 205 arranged to hold a reductant. The container 205 is adapted to containing a suitable amount of reductant and also to being replenishable as necessary. The container might for example accommodate 75 or 50 litres of reductant.

A first line 271 is adapted to leading the reductant to a pump 230 from the container 205. The pump 230 may be any suitable pump. The pump 230 may be a diaphragm pump comprising at least one filter. The pump 230 is adapted to being driven by an electric motor. The pump 230 is adapted to drawing the reductant from the container 205 via the first line 271 and supplying it via a second line 272 to a dosing unit 250. The dosing unit 250 comprises an electrically controlled dosing valve by means of which a flow of reductant added to the exhaust system can be controlled. The pump 230 is adapted to pressurising the reductant in the second line 272. The dosing unit 250 is provided with a throttle unit against which said pressure of the reductant is built up in the subsystem 299.

The dosing unit 250 is adapted to supplying said reductant to an exhaust system (not depicted) of the vehicle 100. More specifically, the dosing unit 250 is adapted to supplying a suitable amount of reductant in a controlled way to an exhaust system of the vehicle 100. In this version, an SCR catalyst (not depicted) is situated downstream of a location in the exhaust system where the reductant supply is effected. The amount of reductant supplied in the exhaust system is intended to be used in a conventional way in the SCR catalyst for reducing the amount of unacceptable emissions in a known way.

The dosing unit 250 is situated adjacent to, for example, an exhaust pipe which is provided to lead exhaust gases from a combustion engine (not depicted) of the vehicle 100 to the SCR catalyst.

A third line 273 runs between the dosing unit 250 and the container 205. For cooling purposes, the third line 273 is adapted to leading back to the container 205 a certain amount of the reductant which is fed to the dosing valve 250.

A first control unit 200 is arranged for communication with a measuring device 220 via a link 293. The measuring device 220 is adapted to detecting a prevailing reductant volume in the container 205. The measuring device 220 is adapted to detecting a prevailing reductant volume in the container 205 in the form of discrete volume indications. In this version, the measuring device 220 is configured as a float sensor which may take the form of one or more vertically arranged elongate elements. The measuring device 220 is adapted to continuously detecting a remaining reducing agent volume in the container 205 and to continuously sending signals which contain information about this to the first control unit 200. The measuring device 220 is described in more detail below with reference to Figure 3a.

The first control unit 200 is arranged for communication with the pump 230 via a link 292. The first control unit 200 is adapted to controlling operation of the pump 230 in order for example to regulate the reductant flows within the subsystem 299.

The first control unit 200 is arranged for communication with the dosing unit 250 via a link 291. The first control unit 200 is adapted to controlling operation of the dosing unit 250 in order for example to regulate the reductant supply to the exhaust system of the vehicle 100. The first control unit 200 is adapted to controlling operation of the dosing unit 250.

The first control unit 200 is adapted, according to a version, to continuously determining remaining volumes of reducing agent in the form of discrete volume indications. This is done on the basis of signals received from the measuring device 220. The first control unit 200 is adapted to continuously calculating a reducing agent volume dosed via the dosing unit 250. This may be done by existing dosing configurations in such a way that a feed pressure of the dosing unit is set such that an opening time of the dosing unit is set with a view to determining a mass flow. The first control unit 200 is adapted to continuously determining cumulative reducing agent volumes dosed. Continuously saving these calculated values makes it possible to establish a calculated reducing agent volume dosed via the dosing unit 250 between any two suitable times preferably defined by the respective start point and end point for a consumption test. According to an aspect of the invention, a first time (start point) and a second time (end point) correspond to the times defined by setting the respective first and second values for remaining volumes of reducing agent in the container 205.

A second control unit 210 is arranged for communication with the first control unit 200 via a link 290. The second control unit 210 may be detachably connected to the first control unit 200. The second control unit 210 may be a control unit external to the vehicle 100. The second control unit 210 may be adapted to performing the innovative method steps according to the invention. The second control unit 210 may be used to cross-load software to the first control unit 200, particularly software for applying the innovative method. The second control unit 210 may alternatively be arranged for communication with the first control unit 200 via an internal network in the vehicle. The second control unit 210 may be adapted to performing substantially similar functions to those of the first control unit 200, e.g. continuously determining remaining reducing agent volumes in the form of discrete volume indications and continuously determining reducing agent volumes dosed by existing dosing configurations. The second control unit 210 may be adapted to performing substantially similar functions to those of the first control unit 200, e.g. calculating a reducing volume dosed via the dosing unit within a time frame defined by the respective times for setting said first value and said second value, or comparing a detected reducing agent volume dosed and a calculated reducing agent volume dosed in a consumption test. It should be noted that the innovative method may be applied by either the first control unit 200 or the second control 210 or by both the first control unit 200 and the second control unit 210.

Figure 3 schematically illustrates a measuring device pertaining to the reducing agent container 205, according to an embodiment of the invention.

The measuring device 220 comprises in this example a rod 221 which has at predetermined positions along it a number of switches 220a, 220b, 220c and 220d. The measuring device 220 may be arranged vertically in the container 205. The measuring device 220 may have any suitable number of switches arranged in this way. The measuring device 220 comprises suitable hardware and is prior art. A float 222 is arranged for sliding along the rod 221. The float 222 is made of suitable material and floats at the surface of the reductant in the container 205. The switches 220a, 220b, 220c and 220d are adapted to detecting the presence of the float 222. When the float is at a given switch, the measuring device 220 generates a signal which contains information about which switch is detecting the presence of the float. This information corresponds to a predetermined level, and therefore to a predetermined volume (or amount), of remaining reducing agent in the container 205. The remaining volume of reducing agent detected is a discrete volume indication, which information is sent in a signal to the first control unit 200 via the link 293.

Figure 3 shows the float 222 at a surface 225 of the reductant. In this example the first control unit 200 has established that a prevailing volume of reducing agent is defined by a volume corresponding to a discrete volume indication associated with switch 220c. Further consumption of reducing agent will result in its level dropping to that of switch 220c, whereupon the actual level of reducing agent will coincide with the reducing agent level detected.

According to the invention, the first control unit 200 sets a first value associated with a discrete volume indication for a switch which serves as start point for a consumption test. This is done at a time when the surface 225 is far enough below a predetermined switch for the measuring device 220 to set a detected discrete volume indication to a subsequent (lower) discrete volume indication. According to the invention, however, a discrete volume indication corresponding specifically to the switch passed is saved to serve as part of a basis for a consumption test. This makes it possible for a higher, more appropriate, discrete volume indication to be used as start point for the consumption test and for greater accuracy to be thus achieved. According to an example, starting the innovative method may be subject to there being a favourable prevailing situation, which might be a state of minimum splashing of the reducing agent in the container, e.g. when the vehicle is travelling at predetermined constant speed, or is stationary, on a level running surface.

According to the invention, the first control unit 200 sets a second value associated with a discrete volume indication for a switch which serves as end point for a consumption test. This is done at a time when the surface 225 is far enough below a predetermined switch for the measuring device 220 to set a detected discrete volume indication to a subsequent (lower) discrete volume indication. According to the invention, however, a discrete volume indication corresponding specifically to the switch passed is saved to serve as part of a basis for a consumption test. This makes it possible for a higher, more appropriate, discrete volume indication to be used as start point for the consumption test and for greater accuracy to be thus achieved.

According to an example, the steps of setting said first and second values for the innovative method may be subject to there being a favourable prevailing situation, which might be a state of minimum splashing of the reducing agent in the container, e.g. when the vehicle is travelling at predetermined constant speed, or is stationary, on a level running surface.

As depicted in Figure 3, each switch on the rod 221 corresponds to a predetermined volume of remaining reducing agent. These volumes may be designated V1, V2, V3, V4 etc. If there are N switches arranged on the rod 221, N corresponding discrete volume indications will be used according to the innovative method, N being a positive whole number.

It should also be noted that a difference, Vdetect, is that between any two volume indications corresponding to first and second values which represent a remaining volume of reducing agent at two different times, e.g. Vdetect may be defined by V1-V2, V1-V4, V2-V3 or V3-V4.

The first control unit 200 is adapted to calculating a reducing agent volume dosed via the dosing unit 250, Vcalculated, to serve as basis of comparison in a consumption test, according to an aspect of the invention.

Figure 4a is a schematic flowchart of a method pertaining to an SCR system for exhaust cleaning which comprises a container, to accommodate a reducing agent, and a dosing unit according to an embodiment of the invention. The method comprises a first step s401 comprising the steps of
- continuously detecting discrete indications for remaining volume of reducing agent in said container,
- setting a first value for said remaining volume to latest detected indication for remaining volume of reducing agent, and
- setting a second value for said remaining volume to latest detected indication for remaining volume of reducing agent, for determination of a detected reducing agent volume dosed. The method ends after step s401.

Figure 4b is a schematic flowchart of a method pertaining to an SCR system for exhaust cleaning which comprises a container, to accommodate a reducing agent, and a dosing unit, according to an embodiment of the invention.

The method comprises a first step s410 comprising the step of continuously detecting discrete indications for remaining volume of reducing agent in said container. This may be done by means of the measuring device 220 as indicated above. Step s410 is followed by a step s420.

Method step s420 comprises the step of setting a first value for said remaining volume to latest detected indication for remaining volume of reducing agent. This may be done by the first control unit 200 and is followed by a step s430.

Method step s430 comprises the step of setting a second value for said remaining volumes to latest detected indication for remaining volume of reducing agent, for determination of a detected reducing agent volume dosed. This may be done by the first control unit 200. Step s430 is followed by a step s440.

Method step s440 comprises the steps of calculating a reducing agent volume dosed via said dosing unit within a time frame defined by the respective times for setting said first value and said second value, and of comparing said detected reducing agent volume dosed and said calculated reducing agent volume dosed in a consumption test. This may be done by the first control unit 200. The method ends after step s440.

Figure 5 is a diagram of a version of a device 500. The control units 200 and 210 described with reference to Figure 2 may in a version comprise the device 500. The device 500 comprises a non-volatile memory 520, a data processing unit 510 and a read/write memory 550. The non-volatile memory 520 has a first memory element 530 in which a computer programme, e.g. an operating system, is stored for controlling the function of the device 500. The device 500 further comprises a bus controller, a serial communication port, I/O means, an A/D converter, a time and date input and transfer unit, an event counter and an interruption controller (not depicted). The non-volatile memory 520 has also a second memory element 540.

A proposed computer programme P comprises routines for continuously detecting discrete indications for remaining volumes of reducing agent in said container. The computer programme P comprises routines for setting a first value for said remaining volumes and for setting a second value for said remaining volumes, for determination of a detected reducing agent volume dosed. The computer programme P comprises routines for setting said first value and said second value to respective latest detected indications for remaining volumes of reducing agent, according to the innovative method. The programme P may be stored in an executable form or in compressed form in a memory 560 and/or in a read/write memory 550.

Where the data processing unit 510 is described as performing a certain function, it means that the data processing unit 510 effects a certain part of the programme stored in the memory 560, or a certain part of the programme stored in the read/write memory 550.

The data processing device 510 can communicate with a data port 599 via a data bus 515. The non-volatile memory 520 is intended for communication with the data processing unit 510 via a data bus 512. The separate memory 560 is intended to communicate with the data processing unit 510 via a data bus 511. The read/write memory 550 is adapted to communicating with the data processing unit 510 via a data bus 514. The data port 599 may for example have the links 290, 291, 292 and 293 connected to it (see Figure 2).

When data are received on the data port 599, they are stored temporarily in the second memory element 540. When input data received have been temporarily stored, the data processing unit 510 is prepared to effect code execution as described above. According to a version, signals received on the data port 599 contain information about a detected volume (discrete volume indication) of reducing agent in the container 205. The signals received on the data port 599 may be used by the device 500 to compare a detected reducing agent volume dosed and a calculated reducing agent volume dosed via the dosing unit 250 in a consumption test, according to an aspect of the invention.

The device 500 is adapted to calculating a reducing agent volume dosed via said dosing unit within a time frame defined by the respective times for setting said first value and said second value.

Parts of the methods herein described may be effected by the device 500 by means of the data processing unit 510 which runs the programme stored in the memory 560 or the read/write memory 550. When the device 500 runs the programme, methods herein described are executed.

## Claims

1. A method pertaining to an SCR system for exhaust cleaning which comprises a container (205), to accommodate a reducing agent, and a dosing unit (250), comprising the steps of
- continuously detecting (S410) discrete indications of remaining volume of reducing agent in said container,
**characterised by** the steps of
- at a first point in time, setting (S420) a first value (V1-VN) for said remaining volume to latest detected indication of remaining volume of reducing agent,
- at a second pont in time subsequent to the first point in time, setting (S430) a second value (V1-VN) for said remaining volume to latest detected indication of remaining volume of reducing agent, and
- determining a detected reducing agent volume dosed (Vdetect) based on a difference in volume between the volume indications corresponding to the first value (V1-VN) and the second value (V1-VN).

2. A method according to claim 1, further comprising the step of
- setting said first value (V1-VN) at any suitable discrete indication for remaining volume of reducing agent.

3. A method according to claim 1 or 2, further comprising the step of
- setting said second value (V1-VN) at any suitable discrete indication for remaining volume of reducing agent.

4. A method according to any one of claims 1-3, further comprising the step of
- setting said first value (V1-VN) and said second value (V1-VN) with a predetermined number of intermediate discrete indications for remaining volume of reducing agent.

5. A method according to any one of claims 1-4, in which said first value (V1-VN) and said second value (V1-VN) are set to correspond to a predetermined difference in volume.

6. A method according to any one of claims 1-5, further comprising the step of
- calculating a reducing agent volume dosed via said dosing unit (250) within a time frame defined by the first and second points in time.

7. A method according to claim 6, further comprising the step of
- comparing (S450) said detected reducing agent volume dosed (Vdetect) and said calculated reducing agent volume dosed (Vcalculated) in a consumption test.

8. An SCR system for exhaust cleaning which comprises a container (205), to accommodate a reducing agent, and a dosing unit (250), comprising
- means (220) for continuously detecting discrete indications of remaining volume of reducing agent in said container,
**characterised by**
- means (200; 210; 500; 510) for, at a first point in time, setting a first value for said remaining volume to latest detected indication of remaining volume of reducing agent,
- means (200; 210; 500; 510) for, at a second pont in time subsequent to the first point in time, setting a second value for said remaining volume to latest detected indication of remaining volume of reducing agent, and
- means for determining a detected reducing agent volume dosed (Vdetect) based on a difference in volume between the volume indications corresponding to the first value (V1-VN) and the second value (V1-VN).

9. An SCR system according to claim 8, further comprising
- means (200; 210; 500; 510) for setting said first value (V1-VN) at any suitable discrete indication for remaining volume of reducing agent.

10. An SCR system according to claim 8 or 9, further comprising
- means (200; 210; 500; 510) for setting said second value (V1-VN) at any suitable discrete indication for remaining volume of reducing agent.

11. An SCR system according to any one of claims 8-10, further comprising
- means (200; 210; 500; 510) for setting said first value (V1-VN) and said second value (V1-VN) with a predetermined number of intermediate discrete indications for remaining volume of reducing agent.

12. An SCR system according to any one of claims 8-11, in which said first value (V1-VN) and said second value (V1-VN) are set to correspond to a predetermined difference in volume (Vdetect).

13. An SCR system according to any one of claims 8-12, further comprising
- means (200; 210; 500; 510) for calculating a reducing agent volume dosed via said dosing unit (250) within a time frame defined by first and second points in time.

14. An SCR system according to claim 13, further comprising
- means (200; 210; 500; 510) for comparing (S450) said detected reducing agent volume dosed (Vdetect) and said calculated reducing agent volume dosed (Vcalculated) in a consumption test.

15. An SCR system according to any one of claims 8-14, in which said reducing agent is a fluid solution which contains urea.

16. A motor vehicle (100; 110) provided with an SCR system according to any one of claims 8-15.

17. A motor vehicle (100; 110) according to claim 16, which vehicle is any from among truck, bus or car.

18. A computer programme (P) comprising programme code for causing an electronic control unit (200; 500) or another computer (210; 500) connected to the electronic control unit (200; 500) to perform steps according to any one of claims 1-7.

19. A computer programme product comprising a programme code stored on a computer-readable medium for performing method steps according to any one of claims 1-7 when said computer programme is run on an electronic control unit (200; 500) or another computer (210; 500) connected to the electronic control unit (200; 500).

## Patentansprüche

1. Verfahren betreffend ein SCR-System zur Abgasreinigung, welches einen Behälter (205) zur Aufnahme eines Reduktionsmittels und eine Dosiereinheit (250) aufweist, mit den Schritten
- fortlaufendes Erfassen (S410) diskreter Angaben eines verbleibenden Reduktionsmittelvolumens in dem Behälter,
**gekennzeichnet durch** die Schritte
- an einem ersten Zeitpunkt, Einstellen (S420) eines ersten Werts (V1-VN) für das verbleibende Volumen auf eine zuletzt erfasste Angabe eines verbleibenden Reduktionsmittelvolumens,
- an einem zweiten Zeitpunkt nach dem ersten Zeitpunkt, Einstellen (S430) eines zweiten Werts (V1-VN) für das verbleibende Volumen auf eine zuletzt erfasste Angabe eines verbleibenden Reduktionsmittelvolumens, und
- Ermitteln eines erfassten dosierten Reduktionsmittelvolumens (Vdetect) basierend auf einem Volumenunterschied zwischen den Volumenangaben entsprechend dem ersten Wert (V1-VN) und dem zweiten Wert (V1-VN).

2. Verfahren nach Anspruch 1, ferner umfassend den Schritt
- Einstellen des ersten Werts (V1-VN) auf jegliche geeignete diskrete Angabe für ein verbleibendes Reduktionsmittelvolumen.

3. Verfahren nach Anspruch 1 oder 2 ferner umfassend den Schritt
- Einstellen des zweiten Werts (V1-VN) auf jegliche geeignete diskrete Angabe für ein verbleibendes Reduktionsmittelvolumen.

4. Verfahren nach einem der Ansprüche 1 bis 3, ferner umfassend den Schritt
- Einstellen des ersten Werts (V1-VN) und des zweiten Werts (V1-VN) mit einer vorbestimmten Anzahl diskreter Zwischenangaben für ein verbleibendes Reduktionsmittelvolumen.

5. Verfahren nach einem der Ansprüche 1 bis 4, bei dem der erste Wert (V1-VN) und der zweite Wert (V1-VN) dazu eingestellt werden, einem vorbestimmten Volumenunterschied zu entsprechen.

6. Verfahren nach einem der Ansprüche 1 bis 5, ferner umfassend den Schritt
- Berechnen eines mittels der Dosiereinheit (250) innerhalb eines durch den ersten und zweiten Zeitpunkt festgelegten Zeitrahmens dosierten Reduktionsmittelvolumens.

7. Verfahren nach Anspruch 6, ferner umfassend den Schritt
- Vergleichen (S450) des erfassten dosierten Reduktionsmittelvolumens (Vdetect) und des berechneten dosierten Reduktionsmittelvolumens (Vcalculated) in einem Verbrauchstest.

8. SCR-System zur Abgasreinigung, welches einen Behälter (205) zur Aufnahme eines Reduktionsmittels und eine Dosiereinheit (250) aufweist, mit
- einer Einrichtung (220) zum fortlaufenden Erfassen diskreter Angaben eines verbleibenden Reduktionsmittelvolumens in dem Behälter,
**gekennzeichnet durch**
- eine Einrichtung (200; 210; 500; 510) zum Einstellen, an einem ersten Zeitpunkt, eines ersten Werts für das verbleibende Volumen auf eine zuletzt erfasste Angabe eines verbleibenden Reduktionsmittelvolumens,
- eine Einrichtung (200; 210; 500; 510) zum Einstellen, an einem zweiten Zeitpunkt nach dem ersten Zeitpunkt, eines zweiten Werts für das verbleibende Volumen auf eine zuletzt erfasste Angabe eines verbleibenden Reduktionsmittelvolumens, und
- eine Einrichtung zum Ermitteln eines erfassten dosierten Reduktionsmittelvolumens (Vdetect) basierend auf einem Volumenunterschied zwischen den Volumenangaben entsprechend dem ersten Wert (V1-VN) und dem zweiten Wert (V1-VN).

9. SCR-System nach Anspruch 8, ferner aufweisend
- eine Einrichtung (200; 210; 500; 510) zum Einstellen des ersten Werts (V1-VN) auf jegliche geeignete diskrete Angabe für ein verbleibendes Reduktionsmittelvolumen.

10. SCR-System nach Anspruch 8 oder 9, ferner aufweisend
- eine Einrichtung (200; 210; 500; 510) zum Einstellen des zweiten Werts (V1-VN) auf jegliche geeignete diskrete Angabe für ein verbleibendes Reduktionsmittelvolumen.

11. SCR-System nach einem der Ansprüche 8 bis 10, ferner aufweisend
- eine Einrichtung (200; 210; 500; 510) zum Einstellen des ersten Werts (V1-VN) und des zweiten Werts (V1-VN) mit einer vorbestimmten Anzahl diskreter Zwischenangaben für ein verbleibendes Reduktionsmittelvolumen.

12. SCR-System nach einem der Ansprüche 8 bis 11, bei dem der erste Wert (V1-VN) und der zweite Werts (V1-VN) dazu eingestellt sind, einem vorbestimmten Volumenunterschied (Vdetect) zu entsprechen.

13. SCR-System nach einem der Ansprüche 8 bis 12, ferner aufweisend
- eine Einrichtung (200; 210; 500; 510) zum Berechnen eines mittels der Dosiereinheit (250) innerhalb eines durch den ersten und zweiten Zeitpunkt festgelegten Zeitrahmens dosierten Reduktionsmittelvolumens.

14. SCR-System nach Anspruch 13, ferner aufweisend
- eine Einrichtung (200; 210; 500; 510) zum Vergleichen (S450) des erfassten dosierten Reduktionsmittelvolumens (Vdetect) und des berechneten dosierten Reduktionsmittelvolumens (Vcalculated) in einem Verbrauchstest.

15. SCR-System nach einem der Ansprüche 8 bis 14, bei dem das Reduktionsmittel eine Harnstoff enthaltende Flüssigkeitslösung ist.

16. Kraftfahrzeug (100; 110), das mit einem SCR-System nach einem der Ansprüche 8 bis 15 ausgerüstet ist.

17. Kraftfahrzeug (100; 110) nach Anspruch 16, wobei das Fahrzeug ein jegliches aus einem Lastwagen, Bus oder PKW ist.

18. Computerprogramm (P) mit Programmcode zum Veranlassen einer elektronischen Steuereinheit (200; 500) oder eines anderen mit der elektronischen Steuereinheit (200; 500) verbundenen Computers (210; 500) zum Ausführen von Schritten nach einem der Ansprüche 1 bis 7.

19. Computerprogrammprodukt mit einem auf einem computerlesbaren Medium gespeicherten Programmcode zum Ausführen von Verfahrensschritten nach einem der Ansprüche 1 bis 7, wenn das Computerprogramm auf einer elektronischen Steuereinheit (200; 500) oder einem anderen mit der elektronischen Steuereinheit (200; 500) verbundenen Computer (210; 500) ausgeführt wird.

## Revendications

1. Procédé se rapportant à un système SCR pour le nettoyage d'un échappement qui comprend un récipient (205), pour recevoir un agent de réduction, et une unité de dosage (250), comprenant les étapes de
- la détection en continu (S410) des indications discrètes du volume restant d'agent de réduction dans ledit récipient,
**caractérisé par** les étapes de
- à un premier point dans le temps, la définition (S420) d'une première valeur (V1-VN) pour ledit volume restant à la dernière indication détectée du volume restant d'agent de réduction,
- à un deuxième point dans le temps suivant le premier point dans le temps, la définition (S430) d'une deuxième valeur (V1-VN) pour ledit volume restant à la dernière indication détectée de volume restant d'agent de réduction, et
- la détermination d'un volume d'agent de réduction dosé détecté (Vdetect) sur base d'une différence de volume entre les indications de volume correspondant à la première valeur (V1-VN) et à la deuxième valeur (V1-VN).

2. Procédé selon la revendication 1, comprenant en outre l'étape de
- la définition de ladite première valeur (V1-VN) à toute indication discrète appropriée pour le volume restant d'agent de réduction.

3. Procédé selon la revendication 1 ou 2, comprenant en outre l'étape de
- la définition de ladite deuxième valeur (V1-VN) à toute indication discrète appropriée pour le volume restant d'agent de réduction.

4. Procédé selon l'une quelconque des revendications 1-3, comprenant en outre l'étape de
- la définition de ladite première valeur (V1-VN) et de ladite deuxième valeur (V1-VN) avec un nombre prédéterminé d'indications discrètes intermédiaires pour le volume restant d'agent de réduction.

5. Procédé selon l'une quelconque des revendications 1-4, dans lequel ladite première valeur (V1-VN) et ladite deuxième valeur (V1-VN) sont définies pour correspondre à une différence prédéterminée du volume.

6. Procédé selon l'une quelconque des revendications 1-5, comprenant en outre l'étape de
- la calcul d'un volume d'agent de réduction dosé via ladite unité de dosage (250) dans un délai défini par les premier et deuxième points dans le temps.

7. Procédé selon la revendication 6, comprenant en outre l'étape de
- la comparaison (S450) dudit volume d'agent de réduction dosé détecté (Vdetect) et dudit volume d'agent de réduction calculé (Vcalculé) dans un test de consommation.

8. Système SCR pour le nettoyage d'un échappement qui comprend un récipient (205), pour recevoir un agent réducteur, et une unité de dosage (250), comprenant
- des moyens (220) pour la détection continue d'indications discrètes de volume restant d'agent de réduction dans ledit conteneur,
**caractérisé en ce que**
- des moyens (200 ; 210 ; 500 ; 510) pour, à un premier point dans le temps, la définition d'une première valeur pour ledit volume restant sur la dernière indication détectée de volume restant d'agent de réduction,
- des moyens (200 ; 210 ; 500 ; 510) pour, à un deuxième point dans le temps suivant le premier point dans le temps, la définition d'une deuxième valeur pour ledit volume restant à la dernière indication détectée de volume restant d'agent de réduction, et
- des moyens pour déterminer un volume d'agent de réduction détecté dosé (Vdetect) sur base d'une différence de volume entre des indications de volume correspondant à la première valeur (V1-VN) et à la deuxième valeur (V1-VN).

9. Système SCR selon la revendication 8, comprenant en outre
- des moyens (200 ; 210 ; 500 ; 510) pour la définition de ladite première valeur (V1-VN) à toute indication discrète appropriée pour le volume restant d'agent de réduction.

10. Système SCR selon la revendication 8 ou 9, comprenant en outre
- des moyens (200 ; 210 ; 500 ; 510) pour la définition de ladite deuxième valeur (V1-VN) à toute indication discrète appropriée pour le volume restant d'agent de réduction.

11. Système SCR selon l'une quelconque des revendications 8-10, comprenant en outre
- des moyens (200 ; 210 ; 500 ; 510) pour la définition de ladite première valeur (V1-VN) et de ladite deuxième valeur (V1-VN) avec un nombre prédéterminé d'indications discrètes intermédiaires pour le volume restant d'agent de réduction.

12. Système SCR selon l'une quelconque des revendications 8-11, dans lequel ladite première valeur (V1-VN) et ladite deuxième valeur (V1-VN) sont définies pour correspondre à une différence prédéterminée en volume (Vdetect).

13. Système SCR selon l'une quelconque des revendications 8-12, comprenant en outre
- des moyens (200 ; 210 ; 500 ; 510) pour le calcul d'un volume d'agent réduit administré dosé par ladite unité de dosage (250) dans un délai de temps défini par des premier et deuxième points dans le temps.

14. Système SCR selon la revendication 13, comprenant en outre
- des moyens (200 ; 210 ; 500 ; 510) pour la comparaison (S450) dudit volume d'agent de réduction dosé détecté (Vdetect) et dudit volume d'agent de réduction calculé (Vcalculé) dans un test de consommation.

15. Système SCR selon l'une quelconque des revendications 8-14, dans lequel ledit agent de réduction est une solution de fluide qui contient de l'urée.

16. Véhicule à moteur (100 ; 110) fourni avec un système SCR selon l'une quelconque des revendications 8-15.

17. Véhicule à moteur (100 ; 110) selon la revendication 16, lequel véhicule est l'un quelconque parmi un camion, un bus ou une voiture.

18. Programme informatique (P) comprenant un code de programme pour amener une unité de commande électronique (200 ; 500) ou un autre ordinateur (210 ; 500) connecté à l'unité de commande électronique (200 ; 500) à exécuter des étapes selon l'une quelconque des revendications 1-7.

19. Produit de programme informatique comprenant un code de programme stocké sur un support lisible par ordinateur pour l'exécution d'étapes de procédé selon l'une quelconque des revendications 1-7 lorsque ledit programme informatique est exécuté sur une unité de commande électronique (200 ; 500) ou sur un autre ordinateur (210 ; 500) connecté à l'unité de commande électronique (200 ; 500).
